# EUROPÄISCHE PATENTSCHRIFT

(11) **EP 1 784 584 B1**
(45) Veröffentlichungstag und Bekanntmachung des Hinweises auf die Patenterteilung: **12.10.2011**
(21) Anmeldenummer: 05774113.4
(22) Anmeldetag: 23.08.2005
(51) Int. Cl.: F16F 15/32, F16F 15/34, C22C 18/04

(54) **AUSWUCHTGEWICHT**
BALANCING WEIGHT
MASSELOTTE D'EQUILIBRAGE

(30) Priorität: 01.09.2004 AT 14602004
(43) Veröffentlichungstag der Anmeldung: 16.05.2007
(73) Patentinhaber: Banner Real GmbH, 4021 Linz (AT)
(72) Erfinder: BAWART, Thomas, A-4020 Linz (AT); MALESCHITZ, Norbert, A-4609 Thalheim bei Wels (AT); KRIFTER, Erich, A-4050 Traun (AT)
(74) Vertreter: Ofner, Clemens
(86) Internationale Anmeldenummer: PCT/AT2005/000332
(87) Internationale Veröffentlichungsnummer: WO 2006/024055

(56) Entgegenhaltungen:
- EP-A- 1 270 752
- WO-A-00/61391
- WO-A-2004/025139
- DE-A1- 2 517 531
- DE-A1- 10 102 321
- DE-B- 1 074 432
- DE-B- 1 083 679
- DE-U1- 20 012 590
- FR-A- 1 535 719
- US-A1- 2003 197 421
- US-A1- 2004 007 912
- PATENT ABSTRACTS OF JAPAN Bd. 015, Nr. 038 (C-0800), 30. Januar 1991 (1991-01-30) -& JP 02 274851 A (NISSO KINZOKU KAGAKU KK; others: 01), 9. November 1990 (1990-11-09)
- PORTER ET AL: "Zinc Handbook : properties, processing, and use in design passage", ZINC HANDBOOK: PROPERTIES, PROCESSING AND USE IN DESIGN, XX, XX, 1 January 1991 (1991-01-01), pages 1-9, XP002205317,

## Beschreibung

Die Erfindung betrifft ein Auswuchtgewicht aus einer Zinkbasislegierung zur Verarbeitung auf einer pneumatischen Kolbenspritzgussmaschine, die neben Zink, ausgedrückt jeweils als obere und untere Bereichsgrenze in Gew.-%, zwischen 0,01 % und 5 % Aluminium und zwischen 0,01 % und 1,2 % Kupfer und zwischen 0,0005 % und 0,06 % Magnesium enthält, sowie ein Verfahren zur Herstellung eines Auswuchtgewichtes aus einer Zinkbasislegierung, die neben Zink, ausgedrückt jeweils als obere und untere Bereichsgrenze in Gew.-%, zwischen 0,01 % und 5,0 % Aluminium, zwischen 0,01 % und 1,2 % Kupfer und zwischen 0,0005 % und 0,06 % Magnesium enthält, nach dem die einzelnen metallischen Legierungskomponenten, gegebenenfalls zumindest teilweise als Vorlegierungen, miteinander vermischt und aufgeschmolzen werden.

Auswuchtgewichte zur Kompensation von Unwuchten, z.B. bei Fahrzeugrädern, bestehen großteils üblicherweise aus Blei bzw. Bleilegierungen, da dieser Werkstoff wegen seiner Zähigkeit überaus formanpassbar ist und damit auch an die Rundungen der Felge, d.h. des Felgenhorns, einfach durch Hammerschläge während der Montage angepasst werden kann. Derartige Auswuchtgewichte sind in unterschiedlichsten Gewichten verfügbar, beispielsweise in Abständen von 5 g bis ca. in Summe 100 g, sodass Unwuchtprobleme, die beispielsweise durch unterschiedliches Abfahren der Reifen oder durch Beschädigungen der Felge entstehen, möglichst genau behoben werden können.

Blei ist bekanntlich überaus toxisch, sodass sich aufgrund der Notwendigkeit des verstärkten Recyclings hierdurch Probleme in der Wiederverwertung von Altstoffen ergeben, bzw. sind selbstverständlich auch aus Umweltgründen Bleiemissionen unerwünscht. Aus diesem Grund wurde auch innerhalb der Europäischen Union durch das Europäische Parlament eine Richtlinie entworfen, betreffend Altfahrzeuge (PE-CONS 36271/00). In dieser Richtlinie wird unter § 2a gefordert, dass "Die Mitgliedsstaaten sicherstellen, dass Werkstoffe und Bauteile von Fahrzeugen, die nach dem 1. Juli 2003 in Verkehr gebracht werden, kein Blei, Quecksilber, Cadmium oder sechswertiges Chrom enthalten, ..."

Es besteht daher die Notwendigkeit, auch in Auswuchtgewichten den Anteil an Blei zu minimieren bzw. auf Null herabzusetzen.

Aus dem Stand der Technik sind bereits verschiedenste Legierungen für Auswuchtgewichte bekannt, die nicht auf Blei basieren. So beschreibt z.B. die DE 200 12 590 U1 ein Auswuchtgewicht, welches gekennzeichnet ist durch die Verwendung von Zink in reiner Form oder als Hauptlegierungsbestandteil. Die Legierung kann einen Aluminiumanteil von weniger als 10 Gew.% und einen Kupferanteil von weniger als 5 Gew.-% aufweisen. Als Befestigungsmittel am Felgenhorn wird unter anderem eine Haltefeder verwendet, die in das Auswuchtgewicht eingegossen wird.

Weiters ist aus der US 2004/0007912 A1 ein Auswuchtgewicht bekannt, welches ebenfalls auf einer Zinkbasislegierung mit weniger als 0,006 % Blei, mit bis zu 4 Gew.-% Aluminium und bis zu 0,04 Gew.-% Magnesium oder auf Reinzink basiert. Derartige Legierungen sind unter der Bezeichnung Zamak bekannt.

Auch die US 2003/0197421 A1 beschreibt ein Auswuchtgewicht aus Zink oder einer Zinkbasislegierung mit einem Mindestanteil an Zink von 39,5 Gew.-%, Zinn in einem Ausmaß bis 50 Gew.-%, Kupfer bis zu 5 Gew.-%, sowie bis zu 5 % Aluminium.

Die EP 1 270 752 A offenbart eine Zinklegierung für den Zinkguss oder Zinkdruckguss, enthaltend außer Zink und den darin enthaltenen unvermeidlichen Verunreinigungen 0,01 bis 6 Gew.-% Aluminium, 0,41 bis 1,5 Gew.-% Kupfer, 0,01 bis 0,06 Gew.-% Magnesium, 0,001 bis 0,2 Gew.-% Silizium sowie 0,002 bis 0,05 Gew.-% Titan und 0,0002 bis 0,005 Gew.-% Bor. Gegebenenfalls kann in der Legierung bis zu 0,2 Gew.-% Chrom enthalten sein. Diese Zinklegierung ist für die Herstellung von Masseln, Tafeln, Bändern oder Drähten bzw. Gussbauteilen oder Druckgussbauteilen bestimmt. Es soll damit die Aufgabe gelöst werden, das Verhalten von Feinzinklegierungen beim Zinkguss und insbesondere beim Zinkdruckguss zu verbessern. Die Verbesserung wird durch die Zugabe von Titan und Bor erreicht, wobei diese Elemente eine Steigerung des Fließverhaltens bewirken. Durch die Kornverfeinerung wird insbesondere für Druckgussbauteile die Duktilität, die Zeitstandfestigkeit, die Dichtigkeit, das Formfüllverhalten beim Druckgussprozess, sowie die Oberflächenqualität verbessert.

Es ist daher Aufgabe der Erfindung, ein Auswuchtgewicht bereitzustellen, welches der voranstehend dargestellten Problematik nachkommt.

Diese Aufgabe wird dadurch gelöst, dass die Zinkbasislegierung weiters, ebenfalls ausgedrückt jeweils als obere und untere Bereichsgrenze in Gew.-%, zwischen 0,0001 % und 0,2 % Silizium, zwischen 0,0005 % und 0,005 % Titan, zwischen 0,0001 % und 0,005 % Bor, Eisen sowie Zinn und/oder Nickel, wobei der Anteil an Eisen ausgewählt ist aus einem Bereich von 0,001 % bis 0,01 %, der Anteil an Zinn und/oder Nickel ausgewählt aus einem Bereich von 0,0001 % bis 0,01 %, und zwischen 0,0011 % und 0,002 % Chrom zulegiert sind und den Rest Zink mit den üblichen herstellungsbedingten Verunreinigungen bildet, sowie durch ein Verfahren, bei dem die Schmelze mit einer pneumatischen Kolbenspritzgussmaschine in eine, ein Formnest mit einer Kontur des Auswuchtgewichtes aufweisende Form eingebracht und vor dem Ausstoß in dieser verfestigt wird, wobei die Zinkbasislegierung erfindungsgemäß zusammengesetzt ist, gelöst.

Von Vorteil ist dabei, dass nach der Erfindung einer Zinkbasislegierung zur Verfügung gestellt wird, die auf einer pneumatischen Spritzgussanlage verarbeitet werden kann. Es kann damit eine dichtere Legierung zur Verfügung gestellt werden, die im Vergleich zu bislang verwendeten Zinkbasislegierungen für Auswuchtgewichte bessere Korrosionseigenschaften auch bereits ohne schützenden Überzug aufweisen kann. Darüber hinaus ist damit ein konstanterer Guss möglich, wodurch auch die Wirtschaftlichkeit des Verfahrens verbessert werden kann.

Durch den Zusatz von Aluminium, insbesondere in einem Anteil entsprechend Anspruch 2, wird die Sprödigkeit der Zinkbasislegierung herabgesetzt bzw. die Zähigkeit der Zinkbasislegierung sowie der Schmelzpunkt erhöht, wodurch sich auch die Verarbeitbarkeit der Zinkbasislegierung verbessert. Ein zu hoher Anteil sollte jedoch wegen der Gefahr der Lunkerbildung vermieden werden.

Durch das Zulegieren von Kupfer, insbesondere in einem Anteil nach Anspruch 3, ist es wiederum möglich die Sprödigkeit von Zink herabzusetzen und eine Steigerung der Festigkeit sowie der Fließeigenschaften zu erreichen, wodurch ebenfalls positive Auswirkungen auf die Be- und Verarbeitung des Auswuchtgewichtes erreicht werden können. Ein zu hoher Kupferanteil wirkt sich allerdings negativ auf die Fließeigenschaften aus.

Durch die gleichzeitige Anwesenheit von Aluminium und Kupfer ist eine Härtung der Legierung und eine Kornverfeinerung durch Entmischungsvorgänge möglich. Zudem können die mechanischen Eigenschaften des Auswuchtgewichtes verbessert werden

Auch der Zusatz von Magnesium, insbesondere in einem Anteil entsprechend Anspruch 4, zu der Zinkbasislegierung für das erfindungsgemäße Auswuchtgewicht, kann ebenfalls eine Verbesserung der Stabilität der Zinkbasislegierung und eine Reduktion der Duktilität der Legierung bewirken. Des weiteren ist es damit möglich, die durch Verunreinigungen im Zink unter Umständen hervorgerufene selektive Korrosion zumindest annähernd zu verhindern bzw. können damit auch derartige korrosionsfördernde Elemente, wie beispielsweise Wismut oder Zinn, zulegiert werden, um die Eigenschaften der Zinkbasislegierung entsprechend zu variieren, unter gleichzeitiger Vermeidung der vorzeitigen Zerstörung des Auswuchtgewichtes durch Korrosion. Die Alterungsbeständigkeit des Auswuchtgewichtes ist durch den Zusatz von Magnesium ebenfalls verbesserbar.

Der Zusatz von Silizium zur Zinkbasislegierung, insbesondere in einem Anteil nach Anspruch 5, ermöglicht eine Ausscheidung von Mg₂Si-Phasen, wodurch die Härte der Zinkbasislegierung gesteigert werden kann. Zum anderen bietet der gleichzeitige Zusatz von Magnesium und Silizium den Vorteil einer feinen Mg₂Si-Ausscheidung.

Der Zusatz von Titan, insbesondere in einem Anteil entsprechend Anspruch 6, ermöglicht zum einen eine Steigerung des Fließverhaltens der Legierung sowie zum anderen eine Erhöhung der Zugfestigkeit des fertigen Auswuchtgewichtes. Es können damit unter anderem Vorteile hinsichtlich des Herstellungsverfahrens erreicht werden, indem gegebenenfalls eine zusätzliche Entgratung nach dem Entformen des fertigen Auswuchtgewichtes durch die verbesserten Fließeigenschaften entfallen kann. Des weiteren wirkt Titan durch Al₃Ti-Auscheidungen kornverfeinernd. Negative Eigenschaften bei zu viel Titan können durch den Zusatz von Kupfer oder Nickel kompensiert werden.

Möglich ist es auch der Zinkbasislegierung Bor zuzulegieren, insbesondere in einem Anteil entsprechend Anspruch 7, welches ebenfalls kornverfeinernd wirkt, wobei es besonders vorteilhaft ist, wenn Bor zusammen mit Titan der Zinkbasislegierung zulegiert wird, insbesondere mit einem Überschuss an Titan.

Durch den Zusatz von Chrom kann ebenfalls die Körnigkeit der Zinkbasislegierung beeinflusst werden, insbesondere unter Zusatz von Magnesium und/oder Silizium. Chrom scheidet sich dabei in Form von feindispersen Phasen aus.

Es besteht weiters die Möglichkeit der Zinkbasislegierung Eisen zuzulegieren, insbesondere in einem Anteil entsprechend Anspruch 8, wodurch ebenfalls eine Verbesserung der Gefügestruktur und damit eine Verbesserung der Verarbeitbarkeit der Zinkbasislegierung erreicht werden kann. Zudem können damit die Korrosionsschutzeigenschaften verbessert werden und lassen sich gleichmäßigere Schichtdicken erzielen. Die Duktilität der Legierung ist damit ebenfalls beeinflussbar.

Weiters ist es möglich der Zinkbasislegierung Zinn zuzulegieren, insbesondere in einem Anteil entsprechend Anspruch 9, um die mechanischen Eigenschaften zu verbessern, wobei hierbei ein zu hoher Zusatz und damit die intergranulare Korrosion, vermieden werden sollte.

Durch die Zugabe von Nickel, insbesondere in einem Anteil entsprechend Anspruch 10, wird, insbesondere bei gleichzeitigem Zusatz von Eisen, die Härte sowie die Duktilität und der Expansionskoeffizient veränderlich.

Die Zinkbasislegierung kann weiters zumindest ein Element, ausgewählt aus einer Gruppe umfassend Mangan, Indium, Arsen, Wismut, Scandium, Niobium, Zirkonium, Calzium sowie Cerium, enthalten, insbesondere in einem Anteil entsprechend Anspruch 12, um beispielsweise die Fluidität der Zinkbasislegierung zu verbessern oder auch zur Kornverfeinerung. Es ist damit weiters auch möglich, dass elektrolytische Verhalten und damit die Korrosionseigenschaften der Zinkbasislegierung in gewissen Grenzen zu variieren, um einem möglichen Korrosionsangriff während der Verwendung des Auswuchtgewichtes entgegenzutreten. Zum Teil ergeben sich besondere Vorteile durch den Zusatz zumindest eines dieser Elemente zur Zinkbasislegierung im Zusammenwirken mit anderen Elementen, beispielsweise verbessert Indium die Aushärtung von Zinkbasislegierungen, die ebenfalls Kupfer enthalten. Durch den Zusatz von Wismut ist es möglich die gegebenenfalls auftretende Schrumpfung durch die Ausdehnung von Wismut bei der Abkühlung zu kompensieren, wodurch die Maßhaltigkeit des Auswuchtgewichtes erhöht werden kann. Scandium, Niobium sowie Zirkonium können positive Auswirkungen durch Kornverfeinerung auf das Gefüge der Zinkbasislegierung haben. Durch den Zusatz von Calzium können die mechanischen Eigenschaften der Zinkbasislegierung verbessert werden.

Gemäß einer Ausführungsvariante des erfindungsgemäßen Verfahrens zur Herstellung des Auswuchtgewichtes ist vorgesehen, dass vor dem Einbringen der Schmelze in das Formnest eine U-förmige Halteklammer eingelegt wird, sodass mit der Ausformung des Auswuchtgewichtes dieses montagefertig vorliegt.

Schließlich ist es gemäß einer Weiterbildungen hierzu möglich, einen Kolben der pneumatischen Kolbenspritzgussmaschine mit einem Druck zu beaufschlagen, der ausgewählt aus einem Bereich mit einer oberen Grenze von 8 bar und einer unteren Grenze von 3 bar und/oder dass die Schmelze unter einer Temperatur einzubringen, die ausgewählt ist aus einem Bereich mit einer oberen Grenze von 480 °C und einer unteren Grenze von 400 °C, wodurch die Wirtschaftlichkeit des Herstellungsverfahrens verbessert werden kann sowie weiters die Eigenschaften der Legierung hinsichtlich Dichte etc., verbessert werden können.

Zum besseren Verständnis der Erfindung wird diese anhand nachfolgender Figuren näher erläutert.

Es zeigen dabei jeweils in schematisch vereinfachter Darstellung:
- Fig. 1: ein erfindungsgemäßes Auswuchtgewicht in perspektivischer Darstellung;
- Fig. 2: das Auswuchtgewicht nach Fig. 1, in Seitenansicht geschnitten entsprechend der Linie A-A in Fig. 1;
- Fig. 3: das erfindungsgemäße Auswuchtgewicht nach Fig. 1 in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

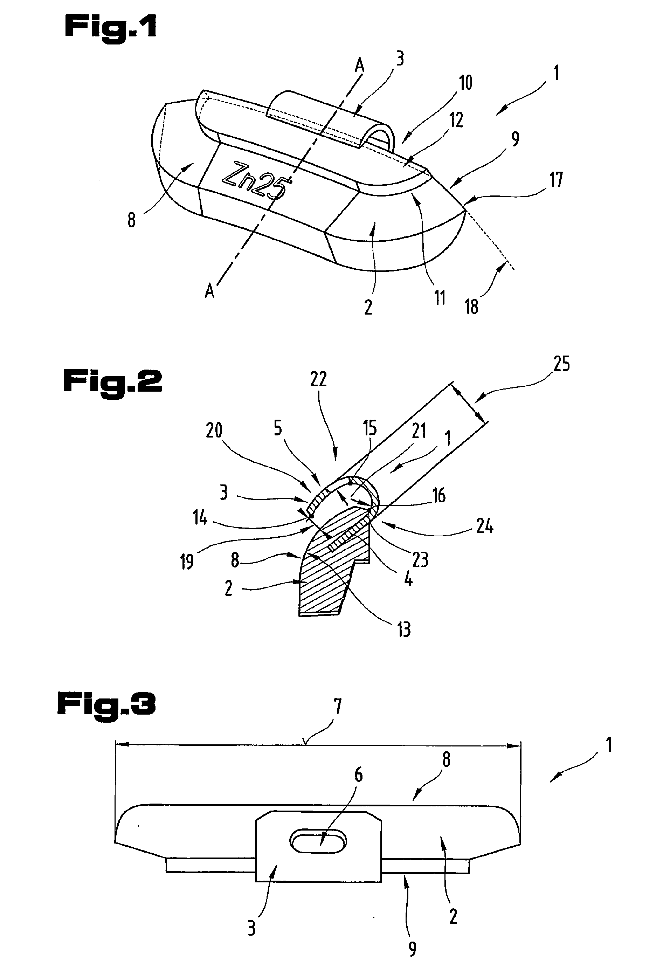

Die Fig. 1 bis 3 zeigen ein erfindungsgemäßes Auswuchtgewicht 1 in schematisch vereinfachter Darstellung. Dieses Auswuchtgewicht 1 besteht aus einem metallischen Gewichtskörper 2, der vorzugsweise massiv ausgeführt ist.

Wie besser aus Fig. 2 ersichtlich ist, kann mit diesem Gewichtskörper 2 eine Halteklammer 3 verbunden sein. Die Halteklammer 3 hat zumindest annähernd eine U-förmige Gestalt mit zwei Schenkeln 4, 5. Die Verbindung dieser Halteklamme 3 erfolgt derart, dass der Schenkel 4 zumindest teilweise in den Gewichtskörper 2 hineinragt, sodass dieser vorzugsweise vollflächig von dem metallischen Material des Gewichtskörpers 2 umgeben ist. Es ist dabei möglich, im Schenkel 4 der Halteklammer 3 nicht gezeigte Aussparungen vorzusehen, sodass das Material des Gewichtskörpers 2 während der schmelzmetallurgischen Herstellung des Auswuchtgewichtes 1 in diese Ausnehmungen fließen kann, um damit eine verbesserte "Verkrallung" der Halteklammer 3 in dem Gewichtskörper 2 zu erreichen.

Üblicherweise besteht die Halteklammer 3 aus Stahl und ist beispielsweise als Stahlfeder ausgebildet. Dies ermöglicht zum einen, dass die Halteklammer 3 eine gewisse Eigensteifigkeit aufweist, sodass beim Anbringen des Auswuchtgewichts 1 am Felgenhorn einer Felge eines Rades diese Halteklammer 3 das Felgenhorn zumindest teilweise umfasst und somit einen festen Halt auf der Felge ermöglicht. Dazu wird der freie Schenkel 5 der Halteklammer 3 über das Felgenhorn geschoben und gegebenenfalls mit Hammerschlägen auf dieses fest anziehend aufgeschoben. Die Eigensteifigkeit der Halteklammer 3 ermöglicht dabei weiters, dass das Auswuchtgewicht 1 nur schwer wieder von der Felge zu entfernen ist, beispielsweise infolge eines unbeabsichtigten Schlages auf dieses Auswuchtgewicht 1. Es ist dabei weiters von Vorteil, wenn die Halteklammer 3 als Haltefeder ausgeführt ist mit einer Vorspannung, die einen festen Sitz auf dem Felgenhorn ermöglicht.

Die Halteklammer 3 kann weiters, insbesondere im freien Schenkel 5 oder der Basis des U-förmigen Profils, eine Aussparung 6 aufweisen, wie dies insbesondere aus Fig. 3 ersichtlich ist, sodass mit einem geeigneten Werkzeug das Auswuchtgewicht 1 bei Bedarf wieder vom Felgenhorn entfernt werden kann.

Anstelle von Stahl ist es selbstverständlich möglich, die Halteklammer 3 aus anderen Werkstoffen zu bilden, welche ähnliche Eigenschaften haben wie Stahl bzw. welche zumindest gewährleisten, dass nach dem Anbringen des Auswuchtgewichtes 1 am Felgenhorn das Auswuchtgewicht fest an diesem aufsitzt.

Diese prinzipielle Ausbildung des Auswuchtgewichtes 1 ist bereits aus dem Stand der Technik bekannt, sodass sich eine weitere Erörterung an dieser Stelle erübrigt und es sei nur beispielsweise auf die DE 101 02 321 A1 verwiesen.

Der Gewichtskörper 2 kann prinzipiell jede beliebige Form aufweisen, da dessen einzige Aufgabe es ist, das Gewicht zur Beseitigung einer Unwucht "bereitzustellen". Es sollte dabei jedoch sichergestellt sein, dass, wie an sich bekannt, der Gewichtskörper 2 zumindest teilweise an der Felge anliegt.

Gemäß dem Ausführungsbeispiel nach den Fig. 1 bis 3 weist der Gewichtskörper 2 eine längliche Gestalt mit einer Gewichtskörperlänge 7 auf. Der Gewichtskörper 2 hat eine an das Felgenhorn der Felge anlegbare Rückseite 8 und eine im montierten Zustand sichtbare Vorderseite 9. Die Rückseite 8 ist, wie insbesondere aus Fig. 2 ersichtlich, bei dem dargestellten Ausführungsbeispiel gekrümmt, wobei diese Krümmung derart gestaltet ist, dass der Gewichtskörper im montierten Zustand zumindest an drei Punkten an der Felge aufliegt. Mit anderen Worten ausgedrückt, weist die Rückseite 8 einen konvexen, bogenförmigen Verlauf auf. Die Vorderseite 9 kann beliebig ausgestaltet sein, und kann beispielsweise auch zur Anbringung eines Identifikationsmittels für das jeweilige Gewicht des Gewichtkörpers herangezogen werden.

Es kann von Vorteil sein, wenn die Vorderseite 9 zumindest in jenem Bereich 10, in dem die Halteklammer 3 in den Gewichtskörper 2 ragt, mit einer Absetzung 11 versehen ist, sodass zumindest in diesem Bereich 10 ein größeres Volumen an dem Werkstoff des Gewichtskörpers 2 für die Halterung der Halteklammer 3 in den Gewichtskörper 2 zur Verfügung steht.

Wie weiters aus der Fig. 1 ersichtlich ist, ist eine Oberkante 12 des Gewichtskörpers 2 ebenfalls gebogen ausgeführt, sodass sich das Auswuchtgewicht 1 im montierten Zustand möglichst eng an das Felgenhorn der Felge anlegt.

Erfindungsgemäß weist die Rückseite 8 zumindest bereichsweise einen Krümmungsradius 13 auf, der ausgewählt ist aus einem Bereich mit einer oberen Grenze von 15 mm und einer unteren Grenze von 5 mm. Durch diesen speziellen Krümmungsradius 13 wird erreicht, dass die Halteklammer 3 in einer Dreipunktauflage an der Felge aufliegt, wodurch die Ausreißfestigkeit des Auswuchtgewichtes 1 von der Felge erhöht werden kann. Es wird damit dem Umstand Rechnung getragen, dass die Felgehörner immer geringer dimensioniert werden, sodass sich die für die herkömmliche Zweipunktauflage zur Verfügung stehende Fläche reduziert, und damit auch die mögliche Fläche die für einen Reibschluss zur Verfügung steht. Durch den erfindungsgemäßen "flachen" Krümmungsradius 13 der Rückseite 8 kann ein breiteres Spektrum am Felgen mit den Auswuchtgewichten 1 bedient werden, sodass die Formenvielfalt und damit auch die Kosten des Auswuchtgewichtes reduziert werden kann. Es ist damit auch eine vereinfachte Lagerhaltung beim Verwender, also beispielsweise in der Werkstatt, möglich. Die Halteklammer 3 liegt dazu in einem Punkt 14 im unteren Kantenbereich im Endbereich des freien Schenkels der Halteklammer 3, in einem Punkt 15 im mittleren Krümmungsbereich der Halteklammer 3 sowie in einem Punkt 16 im Austrittsbereich der Halteklammer 3 aus dem Gewichtskörper 2 am Felgenhorn auf, wie dies aus Fig. 2 ersichtlich ist.

Der Krümmungsradius 13 der Rückseite 8 kann weiters ausgewählt sein aus einem Bereich mit einer unteren Grenze von 7,5 mm, vorzugsweise 9 mm, und einer oberen Grenze von 12,5 mm, vorzugsweise 11 mm. Insbesondere kann der Krümmungsradius 13 der Rückseite 8 10,5 mm betragen.

Die Halteklammer 3 ist vorzugsweise so in den Gewichtskörper 2 eingesetzt, dass sie mit ihrem Schenkel 4 bzw. der daran anschließenden zumindest annähernd U-förmigen Basis im Bereich des Punktes 16 aus dem Gewichtskörper austritt, wobei der Schenkel 4 innerhalb des Gewichtskörper 2 angeordnet ist. Sie ist weiters derart in dem Gewichtskörper 2 angeordnet, wie dies insbesondere aus dem Querschnitt aus Fig. 2 ersichtlich ist, dass besagte Dreipunktauflage ermöglicht wird.

Obwohl der Schenkel 4 der Halteklammer 3 bei dem Ausführungsbeispiel nach Fig. 2 gerade dargestellt ist, kann diese selbstverständlich ebenfalls eine Krümmung aufweisen, beispielsweise wenn damit das Herstellungsverfahren der Halteklammer 3 vereinfacht werden kann oder aber wenn die Halteklammer 3 damit in dem Gewichtskörper 2 einen besseren Halt erfährt.

Die Halteklammer 3 ist weiters derart in den Gewichtskörper 2 eingelagert bzw. eingebettet, dass ein Abstand 19 zwischen dem äußersten Punkt 14 und der Rückseite 8 des Gewichtskörpers 2 einen Wert annimmt, der bei gleichzeitiger Dreipunktauflage des Auswuchtgewichtes 1 an dem Felgenhorn das Aufschieben auf letzteres ermöglicht wird.

Die Halteklammer 3 kann verschiedene Krümmungsradien aufweisen. So weist ein Radius in einem Endbereich 20 einen Wert auf, der ausgewählt ist, aus einem Bereich mit einer unteren Grenze von 6 mm, vorzugsweise 7 mm, insbesondere 8 mm, und einer oberen Grenze von 12 mm, vorzugsweise 11 mm, insbesondere 10 mm. Dieser Radius kann insbesondere 9 mm betragen.

Des weiteren ist ein Radius 21 in einem mittleren Bereich 22, d.h. einem Endbereich des Schenkels 5 bzw. einem Übergangsbereich des Schenkels 5 in die Basis der U-förmigen Halteklammer 3 aus einem Wertebereich ausgewählt, mit einer unteren Grenze von 2 mm, vorzugsweise 2,5 mm, insbesondere 3 mm, und einer oberen Grenze 5 mm, vorzugsweise 4,5 mm, insbesondere 4 mm. Dieser Radius 21 kann einen Wert von 3,5 mm aufweisen.

In einem Übergangsbereich 23 zwischen der Basis und dem weiteren Schenkel 4 der Halteklammer 3 weist ein Radius 24 einen Wert auf, der ausgewählt ist aus einem Bereich mit einer unteren Grenze von 1 mm, vorzugsweise 1,5 mm, insbesondere 2 mm, und einer oberen Grenze von 4 mm, vorzugsweise 3,5 mm, insbesondere 3 mm. Dieser Radius 24 kann einen Wert von 2,5 mm annehmen.

Die beiden Schenkeln 4 und 5 können eine Länge aufweisen, die ausgewählt ist aus einem Bereich von 7 mm bis 1 cm, beispielsweise kann der Schenkel 4 eine Länge von ca. 9,5 mm und der Schenkel 5 eine Länge von ca. 8,5 mm aufweisen.

Des weiteren kann eine Breite 25 der Halteklammer 3 ausgewählt sein aus einem Bereich mit einer unteren Grenze von 5 mm, vorzugsweise 5,5 mm, insbesondere 6 mm, und einer oberen Grenze von 9 mm, vorzugsweise 8,5 mm, insbesondere 8 mm. Diese Breite 25 kann einen Wert von beispielsweise 7 mm aufweisen.

Es sei darauf hingewiesen, dass die in dieser Beschreibung angegebenen Werte bzw. Wertebereiche nicht dermaßen zu verstehen sind, dass die Werte für die jeweiligen Grenzen nicht über- bzw. unterschritten werden können. In anderen Worten ausgedrückt, können gegebenenfalls die gleichen oder ähnlichen Effekte auch mit außerhalb diesen Bereichen liegenden Werten erreicht werden, sodass also die generelle Lehre gegenständlicher Beschreibung diese Bereiche mitumfasst.

Weiters ist es vorteilhaft, wenn auch eine obere Kante 17 des Gewichtskörpers 2 konvex, insbesondere zumindest teilweise an den Krümmungsradius des Felgenhorns angepasst, gekrümmt ist mit einem Radius 18 der Krümmung von beispielsweise 190 mm.

Es ist weiters möglich die Halteklammer 3 bei Bedarf mit korrosionsinhibierenden bzw. - vermeidenden Überzügen, beispielsweise mit einem Lacküberzug oder einem Kunststoffüberzug, zu versehen, oder aber auch eine Kunststoffpulverbeschichtung aufzubringen, um einer sich ausbildenden Potentialdifferenz zwischen den Metallen des Auswuchtgewichtes 1 und der Felge und damit einem Korrosionsangriff vorzubeugen. Selbstverständlich kann dieser Überzug nicht nur über der Haltklammer 3 angebracht werden, sondern auch auf dem gesamten Aufwuchtgewicht 1, sofern dies erforderlich ist. Mit einem derartigen Überzug kann dem Auswuchtgewicht 1 aber auch ein anderes Aussehen verliehen werden, wenn dies für bestimmte Anwendungszwecke bzw. für verschiedene Felgentypen vom Verwender des Auswuchtgewichtes 1 gewünscht wird.

Erfindungsgemäß besteht das Auswuchtgewicht 1 aus einer Zinkbasislegierung, die, wie bereits ausgeführt, neben Zink weiters Aluminium, Kupfer, Magnesium, Silizium, Titan, Bor, Chrom (mit Ausschluss von Cr VI), Eisen, Zinn und/oder Nickel sowie gegebenenfalls zumindest ein Element aus einer Mangan, Indium, Arsen, Wismut, Scandium, Niobium, Zirkonium, Calzium oder Cer umfassenden Elementgruppe enthalten kann, wobei den Rest Zink mit den üblichen herstellungsbedingten Verunreinigungen bildet. Es ist dabei möglich, Zink als Rein - bzw. Reinstzink zu verwenden, ebenso ist es möglich, recyceltes Zink mit gewissen Verunreinigungen, die jedoch vorab spezifiziert sein sollten, um damit eine Überschreitung der Mengen der zugesetzten Elemente zu vermeiden, einzusetzen.

Tabelle 1 zeigt hierzu die jeweiligen Anteile jeweils als mögliche Bereiche dargestellt, wobei die Zahlenangaben jeweils als untere bzw. obere Bereichsgrenzen zu verstehen sind und in Gewichtsprozent, bezogen auf die fertige Zinkbasislegierung ausgedrückt sind. Die Tabelle 1 zeigt in Spalte 1 das jeweilige Element, in Spalte 2 der von der Anmelderin im Rahmen der Erfindungstätigkeit festgestellte, erfindungsgemäße Bereich, in dem das jeweilige Element zugesetzt werden kann, in den Spalten 3 bis 5 jeweils bevorzugte Bereiche hierzu.

**Tabelle 1: Mengenbereiche der Legierungskomponenten**

| 1 | 2 | 3 | 4 | 5 |
|---|---|---|---|---|
| Al | 0,01- 5 | 0,85 - 4,5 | 1,1-3,9 | 1,75 - 3,25 |
| Cu | 0,01 - 1,2 | 0,3 - 1 | 0,55 - 0,95 | 0,75 - 0,85 |
| Mg | 0,0005 - 0,06 | 0,001-0,03 | 0,005 - 0,01 | 0,0075 - 0,0085 |
| Si | 0,0001 - 0,2 | 0,003 - 0,03 | 0,0045 - 0,012 | 0,0075 - 0,0083 |
| Ti | 0,0005 - 0,005 | 0,00081 - 0,0045 | 0,00095 - 0,003 | 0,0011 - 0,002 |
| B | 0,0001 - 0,005 | 0,00015 - 0,0003 | 0,00016 - 0,00025 | 0,00017 - 0,0002 |
| Cr | 0,0011 - 0,002 | | | |
| Fe | 0,001- 0,01 | 0,0015 - 0,009 | 0,0022 - 0,0075 | 0,004 - 0,006 |
| Sn | 0,0001 - 0,01 | 0,0005 - 0,009 | 0,00093 - 0,0075 | 0,002 - 0,006 |
| Ni | 0,0001 - 0,01 | 0,0004 - 0,0092 | 0,0008 - 0,0052 | 0,0003 - 0,002 |
| Mn | bis 5 | 0,01 - 3,25 | 0,05 - 2,15 | 0,075 - 1,11 |
| In | bis 5 | 0,01- 3,25 | 0,05 - 2,15 | 0,075 - 1,11 |
| Bi | bis 5 | 0,01 - 3,25 | 0,05 - 2,15 | 0,075 - 1,11 |
| Sc | bis 5 | 0,01 - 3,25 | 0,05 - 2,15 | 0,075 -1,11 |
| Nb | bis 5 | 0,01 - 3,25 | 0,05 - 2,15 | 0,075 - 1,11 |
| Zr | bis 5 | 0,01 - 3,25 | 0,05 - 2,15 | 0,075 - 1,11 |
| Ca | bis 5 | 0,01- 3,25 | 0,05 - 2,15 | 0,075 - 1,11 |
| Ce | bis 5 | 0,01-3,25 | 0,05 - 2,15 | 0,075 - 1,11 |

In folgender Tabelle 2 sind weiters von der Anmelderin im Rahmen der Erfindung hergestellte Legierungszusammensetzungen angeführt.

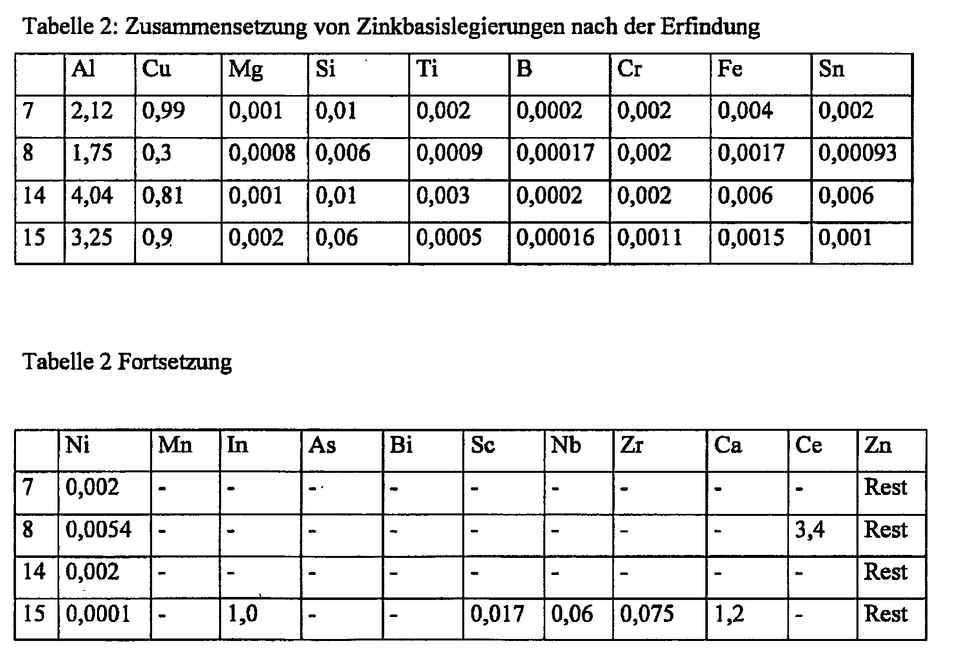

Durch die erfindungemäße Zusammensetzung der Zinkbasislegierung ist es entgegen der bisherigen, allgemeinen Fachmeinung möglich, diese auf einer pneumatischen Spritzgussmaschine zu verarbeiten. Diese kann gegebenenfalls einen hydraulikunterstützten Kolben aufweisen. Dazu werden die einzelnen Legierungselemente vorab miteinander vermischt und aufgeschmolzen und diese Schmelze vorzugsweise in der Folge unter einem Druck in ein entsprechend ausgebildetes Formnest, welches die Konturen des Auswuchtgewichtes 1 wiedergibt, eingebracht, der sich einstellt, wenn ein Zylinder bzw. ein Kolben der pneumatischen Spritzgussmaschine mit einem Arbeitsdruck beaufschlagt wird, der ausgewählt ist aus einem Bereich mit einer oberen Grenze von 8 bar, insbesondere 6 bar, und einer unteren Grenze von 3 bar, insbesondere 4 bar, und/oder mit einer Temperatur, die ausgewählt aus einem Bereich mit einer oberen Grenze von 480 °C, insbesondere 460 °C, und einer unteren Grenze von 400 °C, insbesondere 420 °C. Es wird dadurch der Vorteil erreicht, dass über dieses Verfahren eine dichtere Legierung erhalten wird und in der Folge der Guss in einer konstanteren Weise erfolgen kann, sodass also die Herstellungskosten für das Auswuchtgewicht 1 reduzierbar sind. Die Verarbeitung auf der pneumatischen Spritzgussmaschine wird deshalb möglich, da die Fließeigenschaften der Schmelze aufgrund der gewählten Zusammensetzung entsprechend angepasst bzw. anpassbar sind. Durch die dichtere Legierung des Gewichtskörpers 2 werden auch besser Korrosionseigenschaften des Auswuchtgewichtes 1 erreicht, wenn dieses auf der Felge montiert ist.

Anstelle der Reinelement ist es selbstverständlich - wie allgemein bekannt - möglich, Vorlegierungen zu verwenden, z.B. ALTi5B1, AlTi5B0,5 oder AlTi3B1.

Vorzugsweise wird die Halteklammer 3 bereits vor dem Guss in das Formnest eingelegt, sodass das Auswuchtgewicht 1 nach dem Ausstoßen aus der Form zumindest großteils fertig ist. Auch dieses Verfahren wurde bislang in der Fachwelt negiert, da bisher Einlegeteile mittels pneumatischen Spritzguss nicht mitverarbeitbar waren.

Durch den dichteren Guss ist es weiterhin möglich, Auswuchtgewichte 1 herzustellen, die zumindest annähernd keine Gratbildung aufweisen, sodass das Auswuchtgewicht 1 nach dem Ausstoßen im Prinzip keiner weiteren Nachbehandlung bedarf. Selbstverständlich können aber, wie bereits oben erwähnt, beispielsweise Schutzüberzüge aufgebracht werden.

Bei den in Tabelle 2 angeführten Zusammensetzungen handelt es sich lediglich um Beispielzusammensetzungen, die primär keine Beschränkung des Schutzbereiches darstellen sollen. Es wurde jedoch bei diesen Zusammensetzungen gefunden, dass diese im Vergleich zu herkömmlichen, dem Stand der Technik entsprechenden Auswuchtgewichten bessere Eigenschaften auftreten. Insbesondere kann eine Kernfestigkeit, gemessen als Härte nach Vickers, einen Wert erreichen, der ausgewählt ist aus einem Bereich, je nach verwendeter Legierungszusammensetzung, mit einer oberen Grenze von 100 HV 0,5, vorzugsweise 95 HV 0,5, insbesondere 90 HV 0,5, und einer unteren Grenze von 65 HV 0,5, vorzugsweise 75 HV 0,5, insbesondere 85 HV 0,5, wodurch eine gute Verarbeitbarkeit und Formstabilität des Auswuchtgewichtes 1 ermöglicht wird.

Die Ausführungsbeispiele zeigen mögliche Ausführungsvarianten des Auswuchtgewichtes 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Auswuchtgewichtes 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufstellung

- 1: Auswuchtgewicht
- 2: Gewichtskörper
- 3: Halteklammer
- 4: Schenkel
- 5: Schenkel

- 6: Aussparung
- 7: Gewichtskörperlänge
- 8: Rückseite
- 9: Vorderseite
- 10: Bereich

- 11: Absetzung
- 12: Oberkante
- 13: Krümmungsradius
- 14: Punkt
- 15: Punkt

- 16: Punkt
- 17: Kante
- 18: Radius
- 19: Abstand
- 20: Endbereich

- 21: Radius
- 22: Bereich
- 23: Übergangsbereich
- 24: Radius
- 25: Breite

## Patentansprüche

1. Auswuchtgewicht (1) aus einer Zinkbasislegierung zur Verarbeitung auf einer pneumatischen Kolbenspritzgussmaschine, die neben Zink, ausgedrückt jeweils als obere und untere Bereichsgrenze in Gew.-%, zwischen 0,01 % und 5,0 % Aluminium, zwischen 0,01 % und 1,2 % Kupfer und zwischen 0,0005 % und 0,06 % Magnesium enthält, **dadurch gekennzeichnet, dass** weiters, ebenfalls ausgedrückt jeweils als obere und untere Bereichsgrenze in Gew.-%, zwischen 0,0001 % und 0,2 % Silizium, zwischen 0,0005 % und 0,005 % Titan, zwischen 0,0001 % und 0,005 % Bor, Eisen sowie Zinn und/oder Nickel, wobei der Anteil an Eisen ausgewählt ist aus einem Bereich von 0,001 % bis 0,01 %, der Anteil an Zinn und/oder Nickel ausgewählt ist aus einem Bereich von 0,0001 % bis 0,01 %, und zwischen 0,0011 % und 0,002 % Chrom zulegiert sind und den Rest Zink mit den üblichen herstellungsbedingten Verunreinigungen bildet.

2. Auswuchtgewicht (1) nach Anspruch 1, **dadurch gekennzeichnet, dass** der Zinkbasislegierung Aluminium in einem Anteil zulegiert ist, der ausgewählt ist aus einem Bereich mit einer unteren Grenze von 0,85 Gew.-%, insbesondere 1,1 Gew.-%, vorzugsweise 1,75 Gew.-%, und einer oberen Grenze von 4,5 Gew.-%, insbesondere 3,9 Gew.-%, vorzugsweise 3,25 Gew.-%.

3. Auswuchtgewicht (1) nach Anspruch 1 oder 2, **dadurch gekennzeichnet, dass** der Zinkbasislegierung Kupfer in einem Anteil zulegiert ist, der ausgewählt ist aus einem Bereich mit einer unteren Grenze von 0,3 Gew.-%, insbesondere 0,55 Gew.-%, vorzugsweise 0,75 Gew.-%, und einer oberen Grenze von 1 Gew.-%, insbesondere 0,95 Gew.-%, vorzugsweise 0,85 Gew.-%.

4. Auswuchtgewicht (1) nach einem der vorhergehenden Ansprüche, **dadurch gekennzeichnet, dass** der Zinkbasislegierung Magnesium in einem Anteil zulegiert ist, der ausgewählt ist aus einem Bereich mit einer unteren Grenze von 0,001 Gew.-%, insbesondere 0,005 Gew.-%, vorzugsweise 0,0075 Gew.-%, und einer oberen Grenze von 0,03 Gew.-%, insbesondere 0,01 Gew.-%, vorzugsweise 0,0085 Gew.-%.

5. Auswuchtgewicht (1) nach einem der vorhergehenden Ansprüche, **dadurch gekennzeichnet, dass** der Zinkbasislegierung Silizium in einem Anteil zulegiert ist, der ausgewählt ist aus einem Bereich mit einer unteren Grenze von 0,003 Gew.-%, insbesondere 0,0045 Gew.-%, vorzugsweise 0,0075 Gew.-%, und einer oberen Grenze von 0,03 Gew.-%, insbesondere 0,012 Gew.-%, vorzugsweise 0,0083 Gew.-%.

6. Auswuchtgewicht (1) nach einem der vorhergehenden Ansprüche, **dadurch gekennzeichnet, dass** der Zinkbasislegierung Titan in einem Anteil zulegiert ist, der ausgewählt ist aus einem Bereich mit einer unteren Grenze von 0,00081 Gew.-%, insbesondere 0,00095 Gew.-%, vorzugsweise 0,0011 Gew.-%, und einer oberen Grenze von 0,0045 Gew.-%, insbesondere 0,003 Gew.-%, vorzugsweise 0,002 Gew.-%.

7. Auswuchtgewicht (1) nach einem der vorhergehenden Ansprüche, **dadurch gekennzeichnet, dass** der Zinkbasislegierung Bor in einem Anteil zulegiert ist, der ausgewählt ist aus einem Bereich mit einer unteren Grenze von 0,00015 Gew.-%, insbesondere 0,00016 Gew.-%, vorzugsweise 0,00017 Gew.-%, und einer oberen Grenze von 0,0003 Gew.-%, insbesondere 0,00025 Gew.-%, vorzugsweise 0,0002 Gew.-%.

8. Auswuchtgewicht (1) nach einem der vorhergehenden Ansprüche, **dadurch gekennzeichnet, dass** der Zinkbasislegierung Eisen in einem Anteil zulegiert ist, der ausgewählt ist aus einem Bereich mit einer unteren Grenze von 0,0015 Gew.-%, insbesondere 0,0022 Gew.-%, vorzugsweise 0,004 Gew.-%, und einer oberen Grenze von 0,009 Gew.-%, insbesondere 0,0075 Gew.-%, vorzugsweise 0,006 Gew.-%.

9. Auswuchtgewicht (1) nach einem der vorhergehenden Ansprüche, **dadurch gekennzeichnet, dass** der Zinkbasislegierung Zinn in einem Anteil zulegiert ist, der ausgewählt ist aus einem Bereich mit einer unteren Grenze von 0,0005 Gew.-%, insbesondere 0,00093 Gew.-%, vorzugsweise 0,002 Gew.-%, und einer oberen Grenze von 0,009 Gew.-%, insbesondere 0,0075 Gew.-%, vorzugsweise 0,006 Gew.-%.

10. Auswuchtgewicht (1) nach einem der vorhergehenden Ansprüche, **dadurch gekennzeichnet, dass** der Zinkbasislegierung Nickel in einem Anteil zulegiert ist, der ausgewählt ist aus einem Bereich mit einer unteren Grenze von 0,0004 Gew.-%, insbesondere 0,0008 Gew.-%, vorzugsweise 0,003 Gew.-%, und einer oberen Grenze von 0,0092 Gew.-%, insbesondere 0,0052 Gew.-%, vorzugsweise 0,002 Gew.-%.

11. Auswuchtgewicht (1) nach einem der vorhergehenden Ansprüche, **dadurch gekennzeichnet, dass** der Zinkbasislegierung zumindest ein Element aus einer Gruppe umfassend Mangan, Indium, Arsen, Wismut, Scandium, Niobium, Zirkonium, Calcium, Cer von in Summe maximal 5 Gew.-% zulegiert ist.

12. Auswuchtgewicht (1) nach Anspruch 11, **dadurch gekennzeichnet, dass** der Zinkbasislegierung zumindest ein Element aus der Gruppe umfassend Mangan, Indium, Arsen, Wismut, Scandium, Niobium, Zirkonium, Calcium, Cer in einem Anteil zulegiert ist, der ausgewählt ist aus einem Bereich mit einer unteren Grenze von 0,01 Gew.-%, insbesondere 0,05 Gew.-%, vorzugsweise 0,075 Gew.-%, und einer oberen Grenze von 3,25 Gew.-%, insbesondere 2,15 Gew.-%, vorzugsweise 1,11 Gew.-%.

13. Verfahren zur Herstellung eines Auswuchtgewichtes (1) aus einer Zinkbasislegierung, die neben Zink, ausgedrückt jeweils als obere und untere Bereichsgrenze in Gew.-%, zwischen 0,01 % und 5,0 % Aluminium, zwischen 0,01 % und 1,2 % Kupfer und zwischen 0,0005 % und 0,06 % Magnesium enthält, nach dem die einzelnen metallischen Legierungskomponenten, gegebenenfalls zumindest teilweise als Vorlegierungen, miteinander vermischt und aufgeschmolzen werden, **dadurch gekennzeichnet, dass** die Schmelze mit einer pneumatischen Kolbenspritzgussmaschine, gegebenenfalls unter Hydraulikunterstützung des Zylinders bzw. Kolbens, in eine, ein Formnest mit einer Kontur des Auswuchtgewichtes (1) aufweisende Form eingebracht und vor dem Ausstoß in dieser verfestigt wird und dass weiters der Zinkbasislegierung, ebenfalls ausgedrückt jeweils als obere und untere Bereichsgrenze in Gew.-%, zwischen 0,0001 % und 0,2 % Silizium, zwischen 0,0005 % und 0,005 % Titan, zwischen 0,0001 % und 0,005 % Bor, Eisen sowie Zinn und/oder Nickel, wobei der Anteil an Eisen ausgewählt ist aus einem Bereich von 0,001 % bis 0,01 %, der Anteil an Zinn und/oder Nickel ausgewählt ist aus einem Bereich von 0,0001 % bis 0,01 % und zwischen 0,0011 % und 0,002 % Chrom zulegiert werden und den Rest Zink mit den üblichen herstellungsbedingten Verunreinigungen bildet.

14. Verfahren nach Anspruch 13, **dadurch gekennzeichnet, dass** vor dem einbringen der Schmelze in das Formnest eine u-förmige Halteklammer (3) eingelegt wird.

15. Verfahren nach einem der Ansprüche 13 oder 14, **dadurch gekennzeichnet, dass** der Kolben der pneumatischen Kolbenspritzgussmaschine mit einem Druck beaufschlagt ist, der ausgewählt ist aus einem Bereich mit einer oberen Grenze von 8 bar, insbesondere 6 bar, und einer unteren Grenze von 3 bar, insbesondere 4 bar.

16. Verfahren nach einem der Ansprüche 13 bis 15, **dadurch gekennzeichnet, dass** die Schmelze unter einer Temperatur eingebracht wird, die ausgewählt ist aus einem Bereich mit einer oberen Grenze von 480 °C, insbesondere 460 °C, und einer unteren Grenze von 400 °C, insbesondere 420 °C.

17. Verfahren nach einem der Ansprüche 13 bis 16, **dadurch gekennzeichnet, dass** das Auswuchtgewicht (1) in einer Zusammensetzung entsprechend einem der Ansprüche 2 bis 12 hergestellt wird.

## Claims

1. Balancing weight (1) made from a zinc-based alloy for processing on a pneumatic piston injection casting machine, which contains, in addition to zinc, expressed as an upper and lower range limit based on a % by weight in each case, between 0.01 % and 5.0 % aluminium, between 0.01 % and 1.2 % copper and between 0.0005 % and 0.06 % magnesium, **characterised in that** additionally incorporated in the alloy are, likewise expressed as an upper and lower range limit based on a % by weight in each case, between 0.0001 % and 0.2 % silicon, between 0.0005 % and 0.005 % titanium, between 0.0001 % and 0.005 % boron, iron as well as tin and/or nickel, the proportion of iron being selected from a range of 0.001 % and 0.01 %, the proportion of tin and/or nickel being selected from a range of 0.0001 % and 0.01 %, and between 0.0011 % and 0.002 % chromium, and the rest is made up of zinc and the usual impurities which occur during processing.

2. Balancing weight (1) as claimed in claim 1, **characterised in that** aluminium is incorporated in the zinc-based alloy in a proportion selected from a range with a lower limit of 0.85 % by weight, in particular 1.1 % by weight, preferably 1.75 % by weight, and an upper limit of 4.5 % by weight, in particular 3.9 % by weight, preferably 3.25 % by weight.

3. Balancing weight (1) as claimed in claim 1 or 2, **characterised in that** copper is incorporated in the zinc-based alloy in a proportion selected from a range with a lower limit of 0.3 % by weight, in particular 0.55 % by weight, preferably 0.75 % by weight, and an upper limit of 1 % by weight, in particular 0.95 % by weight, preferably 0.85 % by weight.

4. Balancing weight (1) as claimed in one of the preceding claims, **characterised in that** magnesium is incorporated in the zinc-based alloy in a proportion selected from a range with a lower limit of 0.001 % by weight, in particular 0.005 % by weight, preferably 0.0075 % by weight, and an upper limit of 0.03 % by weight, in particular 0.01 % by weight, preferably 0.0085 % by weight.

5. Balancing weight (1) as claimed in one of the preceding claims, **characterised in that** silicon is incorporated in the zinc-based alloy in a proportion selected from a range with a lower limit of 0.003 % by weight, in particular 0.0045 % by weight, preferably 0.0075 % by weight, and an upper limit of 0.03 % by weight, in particular 0.012 % by weight, preferably 0.0083 % by weight.

6. Balancing weight (1) as claimed in one of the preceding claims, **characterised in that** titanium is incorporated in the zinc-based alloy in a proportion selected from a range with a lower limit of 0.00081 % by weight, in particular 0.00095 % by weight, preferably 0.0011 % by weight, and an upper limit of 0.0045 % by weight, in particular 0.003 % by weight, preferably 0.002 % by weight.

7. Balancing weight (1) as claimed in one of the preceding claims, **characterised in that** boron is incorporated in the zinc-based allot in a proportion selected from a range with a lower limit of 0.00015 % by weight, in particular 0.00016 % by weight, preferably 0.00017 % by weight, and an upper limit of 0.0003 % by weight, in particular 0.00025 % by weight, preferably 0.0002 % by weight.

8. Balancing weight (1) as claimed in one of the preceding claims, **characterised in that** iron is incorporated in the zinc-based alloy in a proportion selected from a range with a lower limit of 0.0015 % by weight, in particular 0.0022 % by weight, preferably 0.004 % by weight, and an upper limit of 0.009 % by weight, in particular 0.0075 % by weight, preferably 0.006 % by weight.

9. Balancing weight (1) as claimed in one of the preceding claims, **characterised in that** tin is incorporated in the zinc-based alloy in a proportion selected from a range with a lower limit of 0.0005 % by weight, in particular 0.00093 % by weight, preferably 0.002 % by weight, and an upper limit of 0.009 % by weight, in particular 0.0075 % by weight, preferably 0.006 % by weight.

10. Balancing weight (1) as claimed in one of the preceding claims, **characterised in that** nickel is incorporated in the zinc-based alloy in a proportion selected from a range with a lower limit of 0.0004 % by weight, in particular 0.0008 % by weight, preferably 0.003 % by weight, and an upper limit of 0.0092 % by weight, in particular 0.0052 % by weight, preferably 0.002% by weight.

11. Balancing weight (1) as claimed in one of the preceding claims, **characterised in that** at least one element selected from a group comprising manganese, indium, arsenic, bismuth, scandium, niobium, zirconium, calcium, cerium is incorporated in the zinc-based alloy in a total of at most 5 % by weight.

12. Balancing weight (1) as claimed in claim 11, **characterised in that** at least one element selected from the group comprising manganese, indium, arsenic, bismuth, scandium, niobium, zirconium, calcium, cerium is incorporated in the zinc-based alloy in a proportion selected from a range with a lower limit of 0.01 % by weight, in particular 0.05 % by weight, preferably 0.075 % by weight, and an upper limit of 3.25 % by weight, in particular 2.15 % by weight, preferably 1.11 % by weight.

13. Method of producing a balancing weight (1) made from a zinc-based alloy which contains, in addition to zinc, expressed as an upper and lower range limit based on a % by weight in each case, between 0.01 % and 5.0 % aluminium, between 0.01 % and 1.2 % copper and between 0.0005 % and 0.6 % magnesium, whereby at least some of the individual metallic alloy components are mixed with one another and melted to form initial alloys if necessary,
**characterised in that** the melt is introduced into a mould incorporating a mould nest with a contour of the balancing weight (1) by means of a pneumatic piston injection casting machine, the cylinder and piston being hydraulically assisted if necessary, where it is solidified before being ejected, and also incorporated in the zinc-based alloy, likewise expressed as an upper and lower range limit based on a % by weight in each case, between 0.0001 % and 0.2 % silicon, between 0.0005 % and 0.005 % titanium, between 0.0001 % and 0.005 % boron, iron as well as tin and/or nickel, the proportion of iron being selected from a range of 0.001 % and 0.01 %, the proportion of tin and/or nickel being selected from a range of 0.0001 % and 0.01 %, and between 0.0011 % and 0.002 % chromium, and the rest is made up of zinc and the usual impurities which occur during processing.

14. Method as claimed in claim 13, **characterised in that** a U-shaped retaining clamp (3) is placed into the mould nest before introducing the melt.

15. Method as claimed in one of claims 13 or 14, **characterised in that** a pressure selected from a range with an upper limit of 8 bar, in particular 6 bar, and a lower limit of 3 bar, in particular 4 bar, is applied to the piston of the pneumatic piston injection casting machine.

16. Method as claimed in one of claims 13 to 15, **characterised in that** the melt is introduced at a temperature selected from a range with an upper limit of 480°C, in particular 460°C, and a lower limit of 400°C, in particular 420°C.

17. Method as claimed in one of claims 13 to 16, **characterised in that** the balancing weight (1) is made from a composition as claimed in one of claims 2 to 12.

## Revendications

1. Masselotte d'équilibrage (1) en un alliage à base de zinc pour le traitement sur une presse d'injection à piston pneumatique, qui contient à part le zinc, indiqué à chaque fois comme limites de plage supérieure et inférieure, en % de poids, entre 0,01 % et 5,0% d'aluminium, entre 0,01% et 1,2% de cuivre et entre 0,0005% et 0,06 de magnésium, **caractérisée en ce que** sont alliés en outre, également exprimés à chaque fois comme limite de plage supérieure et inférieure, en % de poids, entre 0,0001% et 0,2% de silicium, entre 0,0005% et 0,005% de titane, entre 0,0001 et 0,005 de bore, fer ainsi qu'étain et/ou nickel, la part en fer étant sélectionnée dans une plage de 0,001% à 0,01%, la part en étain et/ou en nickel étant sélectionnée dans une plage de 0,0001% à 0,01%, et entre 0,0011% et 0,002% de chrome, et le reste est du zinc avec les impuretés usuelles liées à la fabrication.

2. Masselotte d'équilibrage (1) selon la revendication 1, **caractérisée en ce qu'**est allié à l'alliage à base de zinc de l'aluminium en une partie qui est sélectionnée dans une plage ayant une limite inférieure de 0,85% en poids, en particulier 1,1% en poids, de préférence 1,75% en poids et une limite supérieure de 4,5% en poids, en particulier 3,9% en poids, de préférence 3,25% en poids.

3. Masselotte d'équilibrage (1) selon la revendication 1 ou 2, **caractérisée en ce qu'**est allié à l'alliage à base de zinc du cuivre en une partie qui est sélectionnée dans une plage ayant une limite inférieure de 0,3% en poids, en particulier 0,55% en poids, de préférence 0,75% en poids, et une limite supérieure de 1% en poids, en particulier 0,95% en poids, de préférence 0,85% en poids.

4. Masselotte d'équilibrage (1) selon l'une des revendications précédentes, **caractérisée en ce qu'**est allié à l'alliage à base de zinc du magnésium en une partie qui est sélectionnée dans une plage ayant une limite inférieure de 0,001% en poids, en particulier 0,005% en poids, de préférence 0,0075% en poids, et une limite supérieure de 0,03% en poids, en particulier 0,01% en poids, de préférence 0,0085% en poids.

5. Masselotte d'équilibrage (1) selon l'une des revendications précédentes, **caractérisée en ce qu'**est allié à l'alliage à base de zinc du silicium en une partie qui est sélectionnée dans une plage ayant une limite inférieure de 0,003% en poids, en particulier 0,0045% en poids, de préférence 0,0075% en poids, et une limite supérieure de 0,03% en poids, en particulier 0,012% en poids, de préférence 0,0083% en poids.

6. Masselotte d'équilibrage (1) selon l'une des revendications précédentes, **caractérisée en ce qu'**est allié à l'alliage à base de zinc du titane en une partie qui est sélectionnée dans une plage ayant une limite inférieure de 0,00081 % en poids, en particulier 0,00095% en poids, de préférence 0,0011% en poids, et une limite supérieure de 0,0045% en poids, en particulier 0,003% en poids, de préférence 0,002% en poids.

7. Masselotte d'équilibrage (1) selon l'une des revendications précédentes, **caractérisée en ce qu'**est allié à l'alliage à base de zinc du bore en une partie qui est sélectionnée dans une plage ayant une limite inférieure de 0,00015% en poids, en particulier 0,00016% en poids, de préférence 0,00017% en poids, et une limite supérieure de 0,0003% en poids, en particulier 0,00025% en poids, de préférence 0,0002% en poids.

8. Masselotte d'équilibrage (1) selon l'une des revendications précédentes, **caractérisée en ce qu'**est allié à l'alliage à base de zinc du fer en une partie qui est sélectionnée dans une plage ayant une limite inférieure de 0,0015% en poids, en particulier 0,0022% en poids, de préférence 0,004% en poids, et une limite supérieure de 0,009% en poids, en particulier 0,0075% en poids, de préférence 0,006% en poids.

9. Masselotte d'équilibrage (1) selon l'une des revendications précédentes, **caractérisée en ce qu'**est allié à l'alliage à base de zinc de l'étain en une partie qui est sélectionnée dans une plage ayant une limite inférieure de 0,0005% en poids, en particulier 0,00093% en poids, de préférence 0,002% en poids, et une limite supérieure de 0,009% en poids, en particulier 0,0075% en poids, de préférence 0,006% en poids.

10. Masselotte d'équilibrage (1) selon l'une des revendications précédentes, **caractérisée en ce qu'**est allié à l'alliage à base de zinc du nickel en une partie qui est sélectionnée dans une plage ayant une limite inférieure de 0,0004% en poids, en particulier 0,0008% en poids, de préférence 0,003% en poids, et une limite supérieure de 0,0092% en poids, en particulier 0,0052% en poids, de préférence 0,002% en poids.

11. Masselotte d'équilibrage (1) selon l'une des revendications précédentes, **caractérisée en ce qu'**est allié à l'alliage à base de zinc au moins un élément d'un groupe comprenant le manganèse, indium, arsène, bismuth, scandium, niobium, zirconium, calcium, cerium, au total au maximum de 5% en poids.

12. Masselotte d'équilibrage (1) selon la revendication 11, **caractérisée en ce qu'**est allié à l'alliage à base de zinc au moins un élément du groupe comprenant le manganèse, indium, arsène, bismuth, scandium, niobium, zirconium, calcium, cerium en une partie qui est sélectionnée dans une plage ayant une limite inférieure de 0,01 % en poids, en particulier 0,05% en poids, de préférence 0,075% en poids et une limite supérieure de 3,25% en poids, en particulier 2,15% en poids, de préférence 1,11% en poids.

13. Procédé de fabrication d'une masselotte d'équilibrage (1) en un alliage à base de zinc, qui contient à part le zinc, exprimé à chaque fois comme limite de plage supérieure et inférieure en % en poids, entre 0,01% et 5,0% d'aluminium, entre 0,01% et 1,2% de cuivre et entre 0,0005% et 0,06 de magnésium, selon lesquels les composants d'alliage métalliques individuels, le cas échéant au moins partiellement en tant qu'alliages préalables, sont mélanges et fondus les uns avec les autres, **caractérisé en ce que** la fonte est introduite à l'aide d'une presse d'injection à piston pneumatique, le cas échéant par un soutien hydraulique du vérin respectivement piston, est introduite dans un moule présentant un nid de moule ayant un contour de la masselotte d'équilibrage (1) et, avant l'injection, est amenée à se solidifier dans celui-ci, et **en ce que** sont alliés en outre à l'alliage à base de zinc, également exprimé à chaque fois comme limites supérieure et inférieure, en % en poids entre 0,0001% et 0,2% de silicium, entre 0,0005% et 0,005% de titane, entre 0,0001% et 0,005% de bore, fer ainsi qu'étain et/ou nickel, la part en fer étant sélectionnée dans une plage de 0,001% à 0,01%, la part en étain et/ou en nickel étant sélectionnée dans une plage de 0,0001% à 0,01%, et entre 0,0011% et 0,002% de chrome, et le reste est formé par le zinc avec les impuretés usuelles liées à la fabrication.

14. Procédé selon la revendication 13, **caractérisé en ce qu'**avant l'introduction de la fonte dans le nid de moule, une pince de retenue en forme de u (3) est insérée.

15. Procédé selon l'une des revendications 13 ou 14, **caractérisé en ce que** le piston de la presse d'injection à piston pneumatique est chargé en une pression qui est sélectionnée dans une plage ayant une limite supérieure de 8 bar, en particulier 6 bar, et une limite inférieure de 3 bar, en particulier 4 bar.

16. Procédé selon l'une des revendications 13 à 15, **caractérisé en ce que** la fonte est introduite à une température qui est sélectionnée dans une plage ayant une limite supérieure de 480°C, en particulier 460°C, et une limite inférieure de 400°C, en particulier 420°C.

17. Procédé selon l'une des revendications 13 à 16, **caractérisé en ce que** la masselotte d'équilibrage (1) est fabriquée en une composition selon l'une des revendications 2 à 12.
